# FASCICULE DE BREVET EUROPEEN

(11) **EP 2 016 007 B1**
(45) Date de publication et mention de la délivrance du brevet: **21.08.2013**
(21) Numéro de dépôt: 07728412.3
(22) Date de dépôt: 23.04.2007
(51) Int. Cl.: B65D 85/00, B60S 1/38

(54) **DISPOSITIF ET ENSEMBLE DE MAINTIEN POUR BALAI D'ESSUIE-GLACE**
HALTEVORRICHTUNG UND -SET FÜR EIN SCHEIBENWISCHERBLATT
BEARING DEVICE AND ASSEMBLY FOR A WINDSCREEN WIPER BLADE

(30) Priorité: 25.04.2006 FR 0603676
(43) Date de publication de la demande: 21.01.2009
(73) Titulaire: Valeo Systèmes d'Essuyage, 78321 La Verrière (FR)
(72) Inventeur: JEHANNET, Jean-Pierre, 78321 La Verriere (FR); BATICLE, Nathalie, 78321 La Verriere (FR)
(74) Mandataire: Rosolen-Delarue, Katell
(86) Numéro de dépôt international: PCT/EP2007/053955
(87) Numéro de publication internationale: WO 2007/122218

(56) Documents cités:
- EP-A- 1 512 593
- DE-A1- 2 326 093
- FR-A- 2 133 247
- FR-A- 2 875 486
- FR-A1- 2 859 713
- US-A1- 2005 252 812
- US-B1- 6 779 661

## Description

L'invention concerne un dispositif de maintien pour un balai d'essuie-glace, destiné à être utilisé notamment en vu de sa commercialisation dans les rayonnages des magasins ou du transport des balais d'essuie-glace depuis le lieu de production vers le lieu de conditionnement ou vers le lieu d'assemblage sur un véhicule automobile.

L'invention est également relative à un ensemble de maintien d'une paire de balais d'essuie-glace, par exemple pour un kit de remplacement des balais d'essuie-glace d'un véhicule.

L'invention présentée concerne également un procédé de montage d'un balai d'essuie-glace dans un dispositif de maintien selon l'invention.

De manière plus générale, l'invention se rapporte aussi à un emballage pour balai d'essuie-glace comprenant un dispositif de maintien selon l'invention.

Pour la vente en rayonnage, les balais d'essuie-glace classiques sont généralement conditionnés sous blister ou dans un emballage cartonné, par exemple une boîte, de forme générale longiligne et linéaire. En effet, la forme linéaire de ces balais permet un conditionnement simple, linéaire et dont l'encombrement n'est pas nécessairement plus important que les dimensions du balai d'essuie-glace.

Pour les balais d'essuie-glace plats désignés par l'anglicisme « flat-blade », le conditionnement s'avère plus problématique que dans le cas de balais d'essuie-glace classiques du fait de leur forme générale longiligne et courbe. Concernant les balais d'essuie-glace de type « flat-blade », on se référera, par exemple, aux documents EP11194878 A et WO2005/108176 A qui présentent en détail la structure de ces balais.

La structure d'un balai d'essuie-glace « flat-blade » ne sera pas reprise en détail et on conseille de se reporter aux documents ci-dessus mentionnés.

Une première solution pour permettre un conditionnement des balais d'essuie-glace « flat-blade » est proposée dans le document W02001/30619 A. Ce document décrit un support de conditionnement de forme longitudinale dans lequel vient s'insérer longitudinalement, par l'une des extrémités du support, le balai d'essuie-glace. Le support présente soit des encoches soit des ergots dans lesquels des formes complémentaires prévues sur le balai d'essuie-glace viennent se glisser.

Ce document divulge un dispositif de maintien de balai d'essuie-glace selon le préambule de la revendication 1 et 14.

Cependant, malgré le fait que les encoches ou les ergots du support permettent le maintien du balai d'essuie-glace à plat lorsque celui-ci y est engagé en totalité, il faut mentionner que l'insertion du balai d'essuie-glace dans le support n'est pas aisée et demande un temps certain du fait que des forces s'appliquant au balai d'essuie-glace tendent à le faire revenir dans sa position courbe initiale.

Une autre solution pour le conditionnement de balais d'essuie-glace « flat-blade » est proposée dans le document EP 1 512 593 A qui décrit un élément support de forme longitudinale muni en son centre de moyens de verrouillage, permettant de maintenir le connecteur du balai d'essuie-glace, et à chacune de ses extrémités des moyens de maintien disposés latéralement de part et d'autre du support pour réaliser, en coopération avec les moyens de verrouillage, le maintien du balai d'essuie-glace à plat. Bien qu'intéressant, ce dispositif présente un inconvénient majeur du fait de la multitude de connecteurs existants. En effet, cela signifie qu'il est nécessaire de fabriquer un élément support dont les moyens de verrouillage sont adaptés à chaque connecteur. Cette nécessité rend cette solution difficilement industrialisable et mal adaptée aux questions actuelles de standardisation.

Une troisième solution est présentée dans le document W02005/026005 A où il est prévu de conformer de manière particulière l'emballage du balai d'essuie-glace. Selon ce document, l'emballage est formé d'un cartonnage arrière recouvert sur sa partie avant d'un blister qui comprend des moyens de maintien du balai d'essuie-glace et présente une forme courbe adaptée à la forme courbe du balai d'essuie-glace.

Par ailleurs, il faut noter que dans les solutions précédemment décrites, on est confronté à un risque d'endommagement de la lame d'essuyage du balai d'essuie-glace ce qui est tout à fait préjudiciable pour le client final.

Dans le cadre d'une politique globale de réduction du volume des emballages et de l'encombrement des produits en rayonnage, cette solution, bien que visuellement très attractive, ne peut donner entière satisfaction.

L'invention se propose donc de trouver une solution de conditionnement applicable aux balais d'essuie-glace « flat-blade » mais également aux balais d'essuie-glace classiques, présentant un faible encombrement et résolvant les problèmes de l'art antérieur. Par ailleurs, l'invention cherche également à trouver une solution de conditionnement standardisable et adaptée à un maximum de modèles de balais d'essuie-glace.

A cet effet, l'invention propose un dispositif de maintien pour un balai d'essuie-glace selon la revendication 1, le dispositif ayant une section ouverte destinée à recevoir le balai d'essuie-glace, pour permettre son maintien sensiblement à plat. Selon l'invention, le dispositif de maintien comprend,
- des moyens de positionnement du balai d'essuie-glace dans le dispositif de maintien,
- des moyens de fixation, lesdits moyens de fixation étant sous la forme de points de fixation du balai d'essuie-glace dans le dispositif, distribués sur le dispositif de maintien et agissant sur au moins un élément de la structure du balai d'essuie-glace.

L'invention propose également un procédé de montage d'un balai d'essuie-glace dans un dispositif de maintien, et un emballage pour un balai d'essuie-glace.

Selon d'autres caractéristiques de l'invention,
- Les points de fixation sont disposés de part et d'autre de l'ouverture de la section ouverte du dispositif de maintien et agissent par paire sur l'élément de structure du balai d'essuie-glace.
- L'élément de structure sur lequel agissent les points de fixation est une vertèbre du balai d'essuie-glace.
- Les moyens de positionnement sont disposés de part et d'autre de l'ouverture de la section ouverte du dispositif de maintien et contribuent par paire au maintien du balai d'essuie-glace lors de son positionnement.
- Le dispositif de maintien se présente sous la forme d'un rail de forme générale longitudinale, les moyens de positionnement et les moyens de fixation étant venus de matière avec le rail.
- Le rail est réalisé par injection plastique ou par extrusion.
- Les moyens de positionnement sont réalisés par extrusion avec le rail et les moyens de fixation sont des moyens d'encliquetage destinés à être montés sur le rail.
- Les moyens d'encliquetage comportent au moins une patte de déclipsage pour faciliter le démontage du balai d'essuie-glace.
- Le dispositif de maintien comprend à l'intérieur de la section ouverte des moyens de protection de la lame d'essuyage du balai d'essuie-glace.
- Les moyens de protection de la lame d'essuyage comprennent des parois venues de matières avec le rail du dispositif de maintien.
- Les moyens de positionnement sont disposés aux extrémités du dispositif de maintien.
- Les points de fixation du balai d'essuie-glace sont disposés de part et d'autre du connecteur du balai d'essuie-glace suivant la direction longitudinale du balai d'essuie-glace.
- Le dispositif de maintien présente, de part et d'autre du connecteur, une alternance de moyens de positionnement et des moyens de fixation.
- Le dispositif de maintien comporte des moyens de stabilisation du dispositif de maintien sur une surface plane, disposés sur au moins un côté extérieur de la section ouverte du dispositif de maintien.
- Les moyens de stabilisation sont venus de matière avec le rail du dispositif de maintien.
- Les moyens de fixation portent les moyens de stabilisation.
- Les moyens de positionnement et les moyens de fixation sont indépendants les uns des autres.

L'invention propose également un ensemble de maintien pour un balai d'essuie-glace comprenant deux dispositifs de maintien.
- Le premier dispositif de maintien de l'ensemble de maintien comprend des premiers moyens d'assemblage coopérant, par complémentarité de forme, avec des seconds moyens d'assemblage du second dispositif de maintien.
- Les premiers et seconds moyens d'assemblages sont formés par un couple ergot / encoche.
- Les premiers et seconds moyens d'assemblage coopèrent par un système à boutonnière.
- Chacun des dispositifs de maintien comprend un axe médian selon la direction longitudinale du balai d'essuie-glace et en ce que les axes médians des deux dispositifs de maintien une fois assemblés, sont décalés l'un par rapport à l'autre.

L'invention est également relative à un dispositif de maintien destiné à maintenir dans un profil prédéterminé un balai d'essuie-glace ayant un élément support de lame d'essuyage, le dispositif comportant
- deux moyens d'appui ou de positionnement du balai d'essuie-glace sur le dispositif de maintien ; et
- des moyens de fixation du balai d'essuie-glace au dispositif de maintien,
dans lequel les moyens de fixation du balai sont destinés à coopérer avec l'élément support de lame d'essuyage

D'autres caractéristiques et avantages de l'invention apparaîtront au cours de la lecture de la description détaillée qui va suivre pour la compréhension de laquelle on se reportera aux dessins en annexe parmi lesquels :
- la figure 1 est une vue en perspective d'un dispositif de maintien selon l'invention présentant un balai d'essuie-glace en position de montage sur le dispositif de maintien;
- la figure 2 est une vue similaire à la figure 1 dans laquelle le balai d'essuie-glace est monté dans le dispositif de maintien;
- la figure 3 est une vue en perspective d'un premier mode de réalisation d'un dispositif de maintien selon l'invention;
- les figures 4a et 4b sont des vues en coupe du dispositif de maintien, selon les lignes IVa-IVa et IVb-IVb de la figure 3, dans lequel est monté un balai d'essuie-glace;
- la figure 5 est une vue en perspective d'un second mode de réalisation d'un dispositif de maintien selon l'invention;
- les figures 6a et 6b sont des vues en coupe du dispositif de maintien, selon les lignes VIa-VIa et VIb-VIb de la figure 5, dans lequel est monté un balai d'essuie-glace;
- la figure 7 est une vue en perspective d'un troisième mode de réalisation d'un dispositif de maintien selon l'invention;
- la figure 8a est une vue en coupe du dispositif de maintien, selon la ligne a-a de la figure 7, dans lequel est monté un premier type de balai d'essuie-glace « flat-blade »;
- la figure 8b est une vue éclatée de la figure 8a présentant l'assemblage du balai d'essuie-glace et du dispositif de maintien;
- la figure 8c est une vue en coupe du dispositif de maintien, selon la ligne c-c de la figure 7, dans lequel est monté un premier type de balai d'essuie-glace « flat-blade » ;
- la figure 9a est une vue en coupe du dispositif de maintien, selon la ligne a-a de la figure 7, dans lequel est monté un second type de balai d'essuie-glace « flat-blade »;
- la figure 9b est une vue éclatée de la figure 9a présentant l'assemblage du balai d'essuie-glace et du dispositif de maintien;
- la figure 9c est une vue en coupe du dispositif de maintien, selon la ligne c-c de la figure 7, dans lequel est monté un second type de balai d'essuie-glace « flat-blade » ;
- la figure 9d est une vue en coupe du dispositif de maintien, selon la ligne c-c de la figure 7, dans lequel est monté un second type de balai d'essuie-glace « flat-blade » selon un autre mode de réalisation des moyens de positionnement ;
- la figure 10 est une vue en perspective d'un ensemble de maintien selon l'invention dans lequel deux dispositifs de maintien sont associés;
- les figures 11 a et 11b sont des vues en coupe du dispositif de maintien de la figure 10, selon les lignes XIa-XIa et Xlb-Xlb de la figure 10;
- la figure 12 est une vue en coupe d'un ensemble de maintien dans lequel deux dispositifs de maintien sont associés de manière décalée;
- les figures 13a à 13c présentent des vues en perspectives relatives à l'assemblage de deux dispositifs de maintien dans un ensemble de maintien;
- les figures 14a et 14b présentent des vues détaillées d'un mode de réalisation possible des moyens d'assemblage des deux dispositifs de maintien de la figure 13c ;
- la figure 15 présente une vue schématique d'assemblage de deux dispositifs de maintien par boutonnière.

Dans la suite de la description, on adoptera à titre non limitatif une orientation longitudinale, verticale et transversale indiquée aux figures par le trièdre L,V,T, qui est fixe par rapport au bras d'essuie-glace.

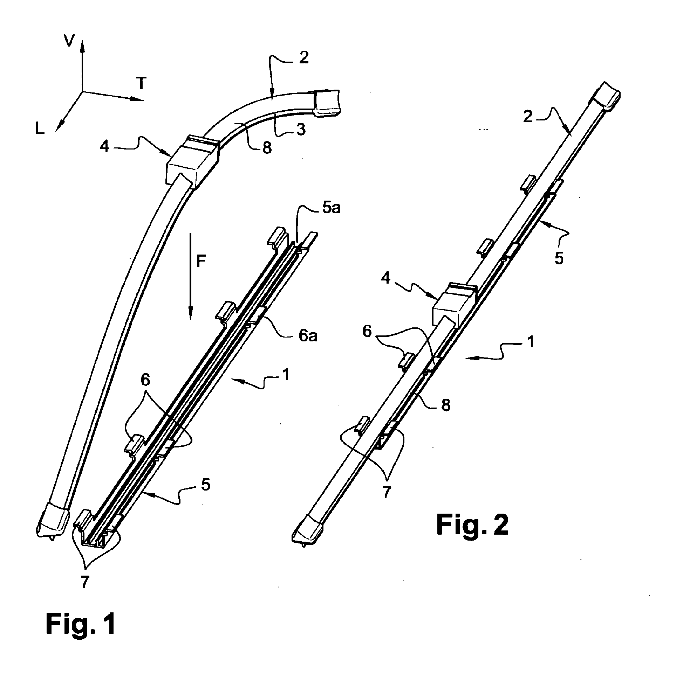

On adoptera aussi l'orientation d'avant en arrière comme étant la direction longitudinale et de gauche à droite en se reportant à la figure 1.

Par la suite, des éléments identiques, analogues ou similaires seront désignés par les mêmes numéros de référence.

Les figures 1 et 2 présentent un dispositif de maintien 1 pour un balai d'essuie-glace 2 de type « flat-blade » de forme courbe muni d'une lame d'essuyage 3. Le balai d'essuie-glace 2 s'étend longitudinalement et comprend, disposé approximativement en son milieu, un connecteur 4 destiné à permettre la connexion du balai d'essuie-glace 2 à un bras d'essuie-glace relié généralement à un moteur d'entraînement.

Le dispositif de maintien 1 se présente sous la forme d'un rail 5 de forme également longitudinale, présentant une section ouverte 5a en forme de U. Le balai d'essuie-glace 2 est destiné à être inséré dans la section ouverte 5a pour y être maintenu à plat. Le rail 5 est une pièce rigide, par exemple en plastique.

Le dispositif de maintien 1 comprend de plus des moyens de fixation 6 et des moyens de positionnement 7 destinés à assurer le maintien à plat du balai d'essuie-glace une fois inséré dans le dispositif. Ainsi le rail 5 comprend des moyens de positionnement 7 et des moyens de fixation 6, lesdits moyens de fixation faisant partie intégrante du rail ou s'ajoutant à celui-ci.

Plus précisément, les moyens de fixation 6 sont répartis sur le dispositif de maintien 1 en points de fixation 6a, au minimum un point de fixation 6a. Ces points de fixation sont distribués de manière particulière sur le dispositif de maintien 1 pour assurer une tenue efficace du balai d'essuie-glace dans celui-ci.

Le mode de réalisation présenté comprend plusieurs points de fixation 6a disposés de part et d'autre de l'ouverture de la section ouverte 5a du dispositif de maintien 1 qui agissent par paire sur le balai d'essuie-glace. Plus spécifiquement, les moyens de fixation 6 agissent sur un élément de structure 8 du balai d'essuie-glace. Cet élément de structure est, par exemple, constitué par une ou plusieurs vertèbres 8 du balai d'essuie-glace.

Les points de fixation 6a sont répartis selon la direction longitudinale du rail 5 de part et d'autre du connecteur 4, une fois le balai d'essuie-glace assemblé dans le dispositif, pour assurer un maintien optimum du balai d'essuie-glace 2.

Etant donné que les moyens de fixation 6 n'agissent pas sur le connecteur 4, on comprend aisément que le dispositif de l'invention peut être utilisé pour un balai d'essuie-glace quelque soit le type de connecteur qu'il comporte. Ceci est particulièrement appréciable en vue de la standardisation du dispositif de maintien 1.

Les moyens de positionnement 7 sont également disposés de part et d'autre de l'ouverture de la section ouverte 5a du dispositif de maintien 1 et contribuent par paire au maintien du balai d'essuie-glace 2. Dans ce mode de réalisation, les moyens de positionnement 7 n'assurent pas la fixation du balai d'essuie-glace à proprement parler mais contribuent à son guidage et à son bon positionnement dans le dispositif de maintien 1. Ils évitent en effet la torsion et le vrillage du balai d'essuie-glace 2 en lui assurant un maintien stable.

Cet agencement des moyens de fixation du balai d'essuie-glace dans le dispositif de maintien permet un blocage vertical et transversal du balai d'essuie-glace dans le dispositif de maintien tout en autorisant un mouvement longitudinal du balai d'essuie-glace.

Sur la figure 1, le balai d'essuie-glace 2 est disposé au dessus de la section ouverte 5a du dispositif de maintien 1 en position de montage. Pour procéder au montage du balai d'essuie-glace 2 dans le dispositif de maintien 1, l'utilisateur exerce une pression dans la direction de la flèche F sur le balai d'essuie-glace 2 en regard des points de fixation 6a répartis sur le dispositif de maintien 1. L'utilisateur agit ainsi à l'encontre des moyens de fixation 6 pour venir insérer et fixer le balai d'essuie-glace dans la section ouverte 5a du rail 5. Le maintien à plat du balai d'essuie-glace 2 dans le dispositif de maintien 1 est ainsi réalisé, comme cela est représenté à la figure 2. Le balai d'essuie-glace 2 est alors fixé dans le dispositif de maintien 1 au niveau des points de fixation 6a, guidé au niveau des moyens de positionnement et libre à ses extrémités.

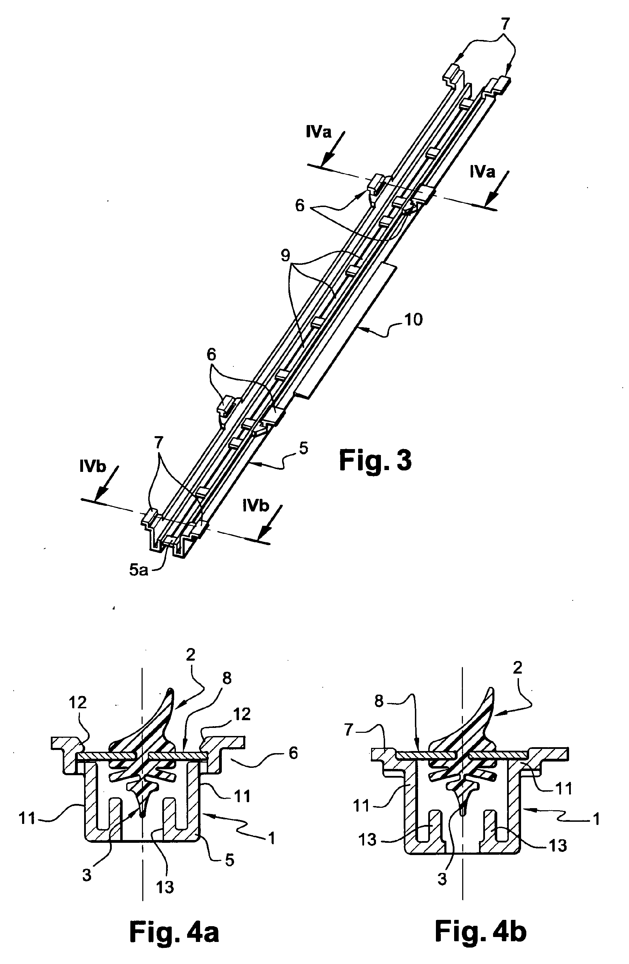

On a représenté à la figure 3 un premier mode de réalisation du dispositif de maintien 1 dans lequel le rail 5 du dispositif de maintien 1 est en matière plastique et réalisé selon une technologie d'injection plastique. Grâce à cette technologie, les moyens de fixation 6 et les moyens de positionnement sont directement réalisés lors de l'injection de sorte qu'ils sont venus de matière avec le rail 5. Comme visible sur la figure 3, le fond de la section ouverte 5a présente des zones traversantes 9, ici rectangulaires, réalisées lors de l'injection plastique et permettant une réduction de matière tout à fait appréciable.

Les moyens de positionnement 7 sont disposés par paire aux extrémités du rail 5 du dispositif de maintien 1 et les moyens de fixation 6 sont répartis par paire le long du dispositif de maintien 1.

Par ailleurs, selon un autre aspect de l'invention, le rail 5 comprend des moyens de stabilisation 10 du dispositif de maintien 1 sur une surface plane permettant ainsi de conserver le dispositif de maintien 1 dans une position d'utilisation pour insertion d'un balai d'essuie-glace.

Les moyens de stabilisation 10 prennent, dans l'exemple présenté, la forme d'une languette plastique disposée sur un côté extérieur du dispositif de maintien et sur la face opposée à l'ouverture de la section ouverte 5a.

Dans le mode de réalisation présenté, les moyens de stabilisation 10 sont venus de matière avec le rail, mais on peut également prévoir qu'ils viennent se fixer sur celui-ci.

Les moyens de stabilisation 10 ont été représentés sur un seul côté du dispositif de maintien mais on peut également en prévoir sur les deux côtés du dispositif de maintien si cela s'avère nécessaire, notamment dans le cas d'un dispositif de maintien de longueur importante.

Les moyens de stabilisation 10 permettent, entre autre, de pouvoir empiler les dispositifs de maintien 1, avec ou sans balai d'essuie-glace 2, les uns sur les autres lors du transport de ceux-ci dans des containers vers le lieux d'emballage en vue de la vente en rayonnage ou vers le lieux d'assemblage sur véhicule.

De manière générale et selon le modèle du véhicule, il est souvent nécessaire pour que l'utilisateur ait un essuyage du pare-brise de son véhicule conforme aux normes requises de disposer d'un premier balai d'essuie-glace pour le côté conducteur (CC) et d'un second balai d'essuie-glace pour le côté passager (CP).

Le dispositif de maintien 1 présenté ici est compatible aussi bien avec des balais d'essuie-glace utilisés pour le côté conducteur que pour le côté passager ce qui est particulièrement appréciable et permet de réelles économies au niveau de la production du dispositif de maintien. La différenciation des balais CC et CP est ensuite réalisée, par exemple, par un marquage du dispositif de maintien 1 ou par l'apposition d'une couleur spécifique au côté concerné (couleur différente entre la version CC et la version CP).

Pour permettre une visualisation détaillée des moyens de fixation 6 et des moyens de positionnement 7, des vues en coupe, figures 4a et 4b, selon les axes IVa-IVa et IVb-IVb, sont proposées.

Par ailleurs, pour une meilleure compréhension du mode d'action des moyens de fixation 6 et de positionnement 7, le dispositif de maintien des figures 4a et 4b est représenté après insertion d'un balai d'essuie-glace 2 dans celui-ci.

La figure 4a présente donc en vue en coupe, au niveau des moyens de fixation 6, le dispositif de maintien 1 de la figure 3 intégrant un balai d'essuie-glace 2.

Le balai d'essuie-glace 2 présente deux vertèbres 8 s'étendant de part et d'autre de l'axe longitudinal du balai d'essuie-glace 2. Les vertèbres 8 reposent sur les extrémités supérieures des parois latérales 11 du rail 5. Les vertèbres 8 sont maintenues localement dans le dispositif de maintien 1 au niveau des points de fixation 6a grâce à des clips 12 venus de matière avec le rail 5. La forme et le nombre des clips 12 varie au besoin ce qui permet d'obtenir une fixation efficace et stable du balai d'essuie-glace 2 dans le dispositif de maintien car les moyens de fixation 6 agissent directement sur un élément de structure du balai d'essuie-glace 2.

La figure 4b présente, également en vue en coupe, les moyens de positionnement 7 du balai d'essuie-glace 2 inséré dans le dispositif de maintien 1. Les moyens de positionnement 7 s'étendent au niveau des extrémités supérieures des parois latérales 11 du rail 5 et encadrent les vertèbres 8 du balai d'essuie-glace 2. Ils permettent donc aux vertèbres 8 d'être guidées et en appui sur le dispositif de maintien 1.

La longueur du dispositif de maintien est adaptée à chaque type de balai d'essuie-glace de manière que les vertèbres du balai d'essuie-glace reposent sur les parois latérales 11 et soient encadrés sur leurs extrémités par les moyens de positionnement 7. Ceci est dû à l'effet ressort des vertèbres du balai d'essuie-glace qui dans le cas présent est un balai d'essuie-glace de type « flat-blade ».

Dans ce mode de réalisation et selon un aspect de l'invention, les moyens de fixation 6 et les moyens de positionnement 7 sont indépendants et agissent de manière différente sur le balai d'essuie-glace lors de son insertion et de son maintien dans le dispositif de maintien 1.

Selon l'invention et comme visible sur les figures 4a et 4b, le dispositif de maintien comprend également des moyens de protection 13 de la lame d'essuyage 3 du balai d'essuie-glace 2. Ces moyens de protection sont présentés sous la forme de parois verticales 13 prenant naissance sur le fond du rail 5 et venues de matières avec celui-ci.

Ces parois de protection 13 permettent d'éviter que la lame ne soit endommagée par contact lors du transport du balai d'essuie-glace dans le dispositif de maintien 1.

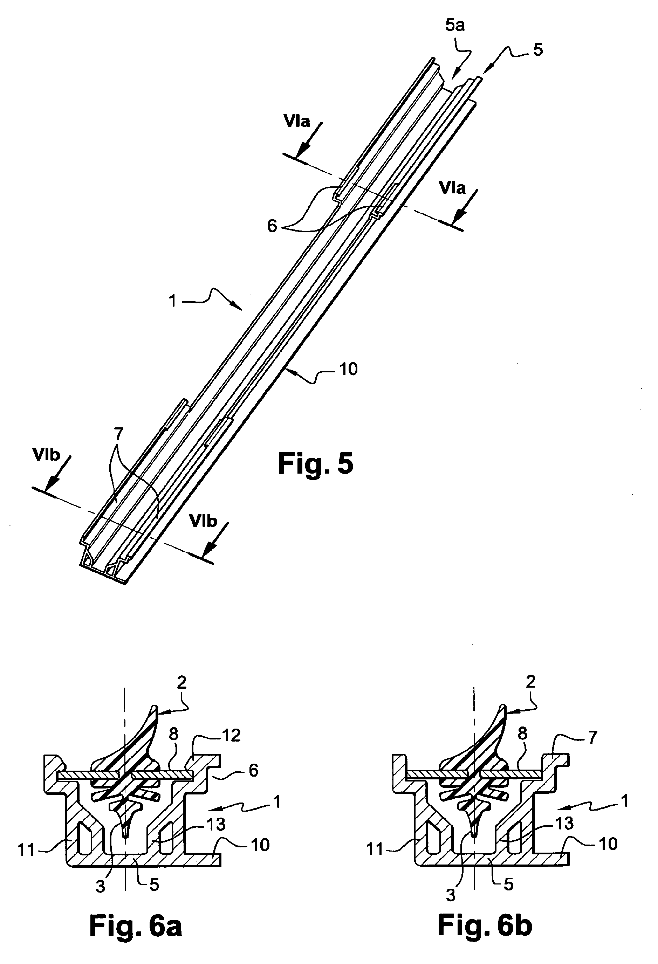

Les figures 5, 6a et 6b présentent un second mode de réalisation du dispositif de maintien dans lequel le dispositif de maintient 1 est réalisé par une technologie d'extrusion. L'utilisation de cette technologie permet directement de réaliser le rail 5 muni de ses moyens de positionnement 7 et de ses moyens de fixation 6. Des découpes localisées sur le rail permettent d'obtenir l'espace nécessaire pour le connecteur du balai d'essuie-glace une fois ce dernier inséré dans le dispositif de maintien.

Les figures 6a et 6b sont des vues en coupe au niveau des lignes VIa-VIa et Vlb-Vlb de la figure 5 et présentent en détail l'action des moyens de fixation 6 (figure 6a) et des moyens de positionnement 7 (figure 6b) au niveau du balai d'essuie-glace et plus précisément au niveau des vertèbres 8 de celui-ci.

Etant donné que la description des figures 6a et 6b est similaire à celle des figures 4a et 4b, celle-ci ne sera pas reprise dans le détail.

Sur la figure 6a, les moyens de fixation 6 des vertèbres 8 du balai d'essuie-glace 2 sont également réalisés sous la forme de clips 12.

Ces clips 12 agissent directement sur les vertèbres 8 du balai d'essuie-glace qui sont en appui sur les extrémités supérieures des parois latérales du rail 5.

Sur la figure 6b présentant les moyens de positionnement 7, les vertèbres 8 prennent appui sur les extrémités supérieures des parois latérales 11 et sont guidées et encadrées à leurs extrémités par les moyens de positionnement 7.

Dans ce mode de réalisation, le rail 5 comprend également une languette de stabilisation 10, réalisée par extrusion lors de l'extrusion du rail 5. La languette de stabilisation 10 s'étend ici tout du long du dispositif de maintien 1.

Comme dans le mode de réalisation précédent, ce dispositif de maintien 1 est compatible avec les balais d'essuie-glace CC et CP ce qui est fort appréciable en terme de standardisation. Par contre, il est nécessaire de prévoir des moyens permettant au client final de pouvoir différencier les balais d'essuie-glace conducteur et passager.

On peut envisager la pose d'un pictogramme identifiant le côté conducteur (CC) et le côté passager (CP) ou l'utilisation d'une couleur différente entre la version CC et CP, sur une zone particulière des moyens de fixation 6, par exemple au niveau d'une extension d'une paroi connexe au clip 12. Cette extension peut, par exemple, être prédécoupée et il s'agit alors, pour un dispositif de maintien présentant deux extensions, chacune portant un pictogramme différent, de casser l'extension souhaitée. Ainsi pour un balai d'essuie-glace conducteur, on cassera l'extension prédécoupée portant le sigle CP, il ne restera que l'extension portant le sigle CC et vice-versa.

Par ailleurs, des parois de protection 13 de la lame d'essuyage 3 sont également présentées dans ce mode de réalisation. Ces parois de protection 13 assurent, en plus de la protection de la lame d'essuyage, une rigidification du dispositif de maintien 1 de par leur agencement. En effet, dans le cas présent, les parois de protection 13 prennent naissance sur le fond du rail 5 et rejoignent les parois latérales 11 du rail 5 créant ainsi des renforts.

Il peut également être souhaitable d'intégrer une lèvre racleuse extérieure sur le fond du rail 5du dispositif de maintien 1 lorsque l'on souhaite utiliser celui-ci comme élément protège lame lors d'un stationnement longue durée tout en souhaitant pouvoir dégivrer le pare-brise du véhicule.

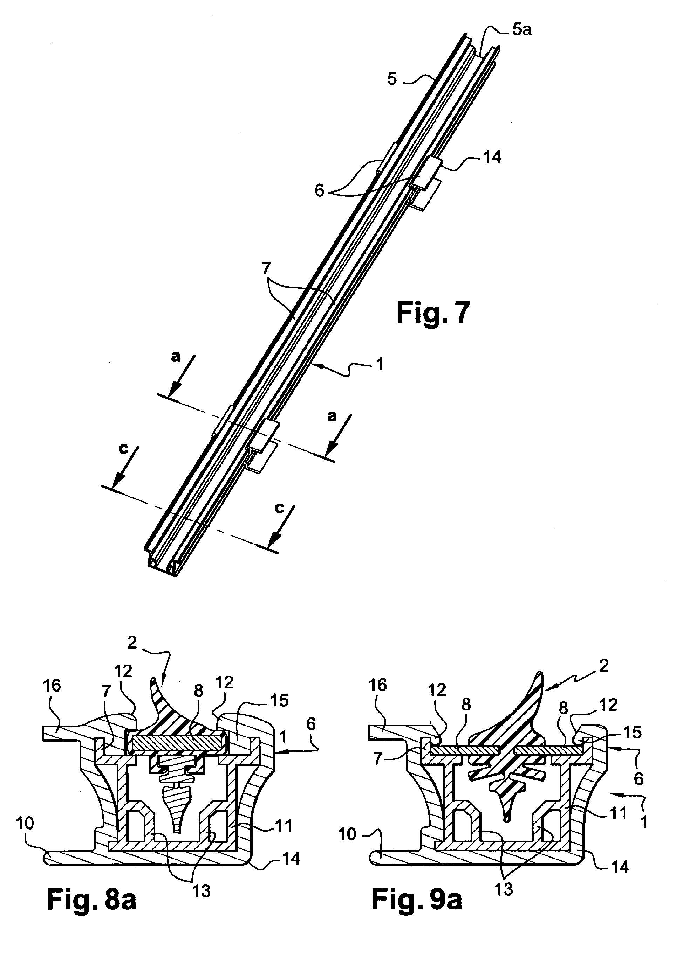

Les figures 7 à 9c présentent quant à elles un troisième mode de réalisation de l'invention dans lequel le rail 5 du dispositif de maintien 1 et les moyens de positionnement 7 sont réalisés, par exemple, par extrusion.

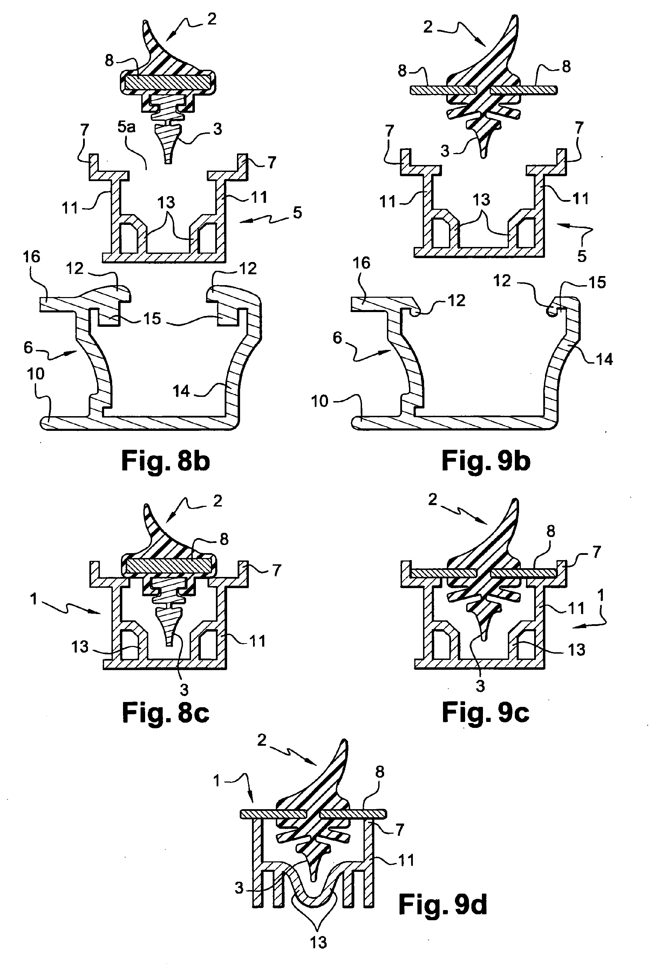

Les figures 8 (a à c) et 9 (a à c) sont relatives à deux modèles de balais d'essuie-glace de type « flat-blade ». L'un est un « flat-blade » classique (figures 9) dans lequel les vertèbres sont insérées dans la structure du balai d'essuie-glace et l'autre (figures 8) est un « flat-blade » dit économique comprenant une mono vertèbre surmoulée avec le déflecteur aérodynamique, encore appelé « spoiler ».

A la différence du mode de réalisation précédent, le rail 5 est réalisé en intégrant les moyens de positionnement 7 qui s'étendent longitudinalement de part et d'autre de l'ouverture de la section ouverte 5a du rail 5, sur l'ensemble de ce dernier.

Le rail 5, pourvu des moyens de positionnement 7, est réalisé en une fois, par exemple, par extrusion et sa structure permet qu'il soit commun à tous les types de balais d'essuie-glace « flat-blade » et ce aussi bien pour les balais d'essuie-glace CC que CP. Ce rail 5 est également valable pour toutes les longueurs de balais d'essuie-glace puisqu'il suffit de le découper à la longueur souhaitée.

Les moyens de fixation 6 agissant par paire prennent quant à eux la forme de moyens d'encliquetage 14 destinés à venir s'encliqueter sur le rail 5. Ces moyens d'encliquetage 14 sont spécifiques pour un type de balai d'essuie-glace donné et peuvent être montés aux endroits souhaités sur le rail 5, suivant la longueur du balai d'essuie-glace à positionner. Les moyens d'encliquetage peuvent être réalisé par extrusion ou par injection.

Les moyens de fixation 6 sont présentés, de manière plus détaillée, aux figures 8a et 9a qui représentent des vues en coupe selon la ligne a-a de la figure 7. Les moyens de fixation 6 sont réalisés sous la forme de moyens d'encliquetage 14 formés, dans la mode de réalisation présenté, d'une agrafe ou attache élastique à section ouverte de forme générale en U destinée à être positionné autour du rail 5. L'attache 14 est agencée autour du rail 5 de manière à laisser l'ouverture de la section ouverte 5a libre pour l'insertion du balai d'essuie-glace 2. L'attache 14 est montée manuellement sur le rail 5 par encliquetage sur le rail. Cet encliquetage élastique se fait par coopération de forme entre les parois formant moyens de positionnement 7 de l'essuie-glace 2 du rail 5 et des moyens de retenue 15 que présente l'attache 14.

Ainsi, une fois mis en place, l'attache 14 est maintenue élastiquement en position sur le rail 5 du dispositif de maintien 1.

Les moyens d'encliquetage sont, par exemple, réalisés par une technique d'extrusion, la filière produite lors de l'extrusion étant ensuite découpée aux dimensions souhaitées pour former les moyens d'encliquetage 14.

Sur la figure 8a dans laquelle le balai d'essuie-glace 2, inséré dans le dispositif de maintien 1 est à mono vertèbre surmoulée, l'attache 14 est retenue sur le rail 5 grâce aux moyens de retenue 15. Ces moyens de retenue sont réalisés sous la forme de plots 15 portant les clips 12 de fixation.

Sur la figure 9a, dans laquelle le balai d'essuie-glace 2, inséré dans le dispositif de maintien 1, est à deux vertèbres, l'attache 14 est retenue sur le rail 5 grâce aux moyens de retenue 15 qui sont, dans cet exemple, formés par les clips 12.

De plus, le rail 5, communs à tous les types de balais d'essuie-glace « flat-blade », comprend des parois de protection 13 de la lame d'essuyage 3 qui en plus de la protection de la lame d'essuyage, assurent une rigidification du dispositif de maintien 1 de par leur agencement entre le fond du rail 5 et les parois latérales 11 de celui-ci.

Par ailleurs, comme on le voit aux figures 8a et 9a, l'attache 14 comprend des moyens de stabilisation 10 du dispositif de maintien sur une surface plane. Ces moyens de stabilisation sont formés par une languette 10 positionnée sur le côté latéral de l'attache et venue de matière avec la partie inférieure de l'attache 14.

La languette 10 est réalisée sur un seul côté en partant du fond de l'attache 14 mais au besoin, il est possible de réaliser une seconde languette de stabilisation sur l'autre côté de l'attache 14.

Selon l'invention, l'attache 14 comprend également une languette de déclipsage ou patte de fixation 16 disposée en regard de la languette de stabilisation 10 qui permet de faciliter l'extraction et le démontage du balai d'essuie-glace 2 lorsqu'il est inséré et fixé dans le dispositif de maintien 1. Pour ce faire, l'utilisateur, détenteur d'un dispositif de maintien 1 pourvu d'un essuie-glace 2, appuie sur la patte de déclipsage 16. Ceci a pour effet d'écarter au moins un des clips 12 des moyens de fixation 6 de l'essuie-glace 2 dans le rail 5 et de permettre le dégagement sans effort particulier de l'essuie-glace 2.

Les figures 8c et 9c présentent, en vue en coupe selon la ligne c-c de la figure 7, les moyens de positionnement 7 du balai d'essuie-glace 2 dans le dispositif de maintien 1.

Dans la figure 8c, la vertèbre 8 repose sur l'extrémité supérieure des parois latérales 11 du rail 5.

Dans la figure 9c, les vertèbres 8 du balai d'essuie-glace 2 reposent sur les parois latérales 11 du rail 5 et sont encadrés sur leurs extrémités par les moyens de positionnement 7.

Selon une alternative possible représentée à la figure 9d, les moyens de positionnement 7 peuvent être réalisée de manière plus économique et n'être constitués que des parois latérales 11 du rail 5. Dans ce cas, les moyens de positionnement 7, positionnés selon l'axe longitudinal du rail 5 appuient directement sur les vertèbres 8 du balai d'essuie-glace 2 et participent au maintien du balai d'essuie-glace à plat dans le dispositif de maintien 1, une fois le balai d'essuie-glace 2 assemblé. Les moyens de positionnement 7 assurent un positionnement correct du balai d'essuie-glace 2 dans le dispositif de maintien 1 en évitant la torsion et le vrillage du balai d'essuie-glace 2.

Sur la figure 9d, une autre forme possible des parois de protection 13 de la lame d'essuyage 3 est également représentée. Ces parois de protection 13 présentent de manière globale les mêmes caractéristiques techniques que celles explicités précédemment.

Les figures 8b et 9b présentent, en vue en coupe selon la ligne a-a de la figure 7 et en position de montage, l'assemblage des moyens de fixation 6 sur le rail 5 et l'insertion du balai d'essuie-glace 2 dans le rail 5 pour les deux modèles de balais d'essuie-glace présentés précédemment.

L'assemblage se fait alors de la manière suivante : une fois le rail 5 intégrant les moyens de positionnement 7 réalisé, l'attache 14, spécifique au balai d'essuie-glace que l'on souhaite positionné dans le dispositif de maintien, est encliqueté sur le rail 5 et maintenu en position par complémentarité de forme et grâce aux moyens de retenue 15.

Cet ensemble formant le dispositif de maintien 1 est alors prêt pour recevoir un balai d'essuie-glace.

La pression exercée par l'utilisateur lors de son appui sur le balai d'essuie-glace 2 positionné au dessus de la section ouverte 5a du dispositif de maintien 1 se fait à l'encontre des clips 12 qui se déforment légèrement pour permettre l'insertion du d'essuie-glace 2 dans l'ensemble. Une fois le balai d'essuie-glace 2 en position dans le dispositif de maintien 1, les clips 12 reprennent leur position initiale et assurent le maintien du balai d'essuie-glace 2 dans la section ouverture 5a.

Cet assemblage est identique que ce soit dans le cas d'un balai d'essuie-glace « flat-blade » classique (figure 9b) ou dans le cas d'un balai d'essuie-glace « flat-blade » dit économique (figure 8b).

Ce mode de réalisation permet de manière tout à fait optimisée d'avoir un rail 5 et des moyens de positionnement 7 communs à tous les types de balais d'essuie-glace « flat-blade », notamment, par exemple, avec ou sans déflecteur aérodynamique, et d'adapter les moyens d'encliquetage 14 au balai d'essuie-glace considéré.

Dans le mode de réalisation de la figure 7, les moyens de positionnement sont réalisés par extrusion avec le rail, mais on peut également envisager qu'ils soient réalisés par injection avec le rail et que les moyens de fixation soient des moyens d'encliquetage destinés à être montés sur le rail. Ainsi, quelque soit le mode de fabrication du rail 5, il est possible en adaptant la forme des moyens de positionnement et de fixation de fixer tous les types de balais d'essuie-glace « flat-blade ».

Pour standardiser encore au maximum le dispositif de maintien, notamment à cause des différentes longueurs de balai d'essuie-glace, il est préconisé de ne produire qu'un nombre limité de dispositif de longueurs différentes. Ainsi, pour des balais d'essuie-glace dont la longueur est supérieure à celle du dispositif de maintien réalisé, ce sont les vertèbres qui viennent en appui sur le rail au niveau des moyens de positionnement. Par contre, pour des balais d'essuie-glace dont la longueur est inférieure à celle du dispositif de maintien produit, ce sont les parties terminales du balai d'essuie-glace, dénommées par anglicisme « end clips », qui viennent en appui sur le rail au niveau des moyens de positionnement.

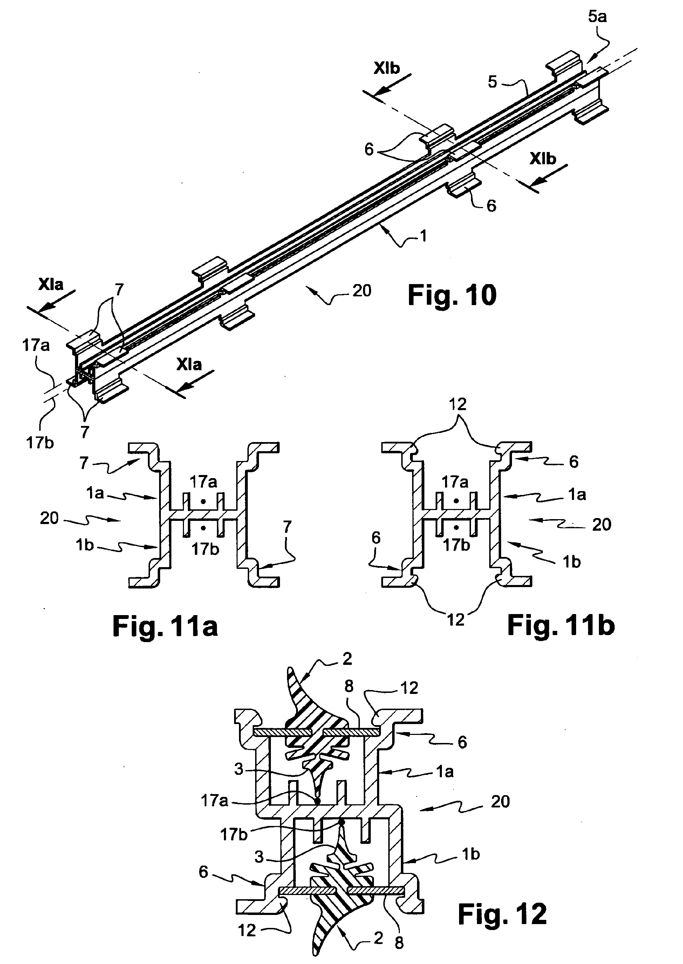

Les figures 10 et 11 sont relatives à un ensemble de maintien 20 comprenant deux dispositifs de maintien tel que décrits précédemment. En particulier, les figures 11 a et 11b sont des vues en coupe selon les lignes XIa-XIa et XIb-XIb de la figure 10. Les deux dispositifs 1a et 1b de l'ensemble 20 sont agencés de sorte que les sections ouvertes 5a de chacun des dispositifs sont à l'opposées l'une de l'autre : l'une sur le dessus de l'ensemble et l'autre sur le dessous de l'ensemble.

L'utilisation d'un tel ensemble 20 est particulièrement intéressante car il permet de monter deux balais d'essuie-glace dans un ensemble très réduit en terme de dimensions. Par exemple, dans l'ensemble 20, il est possible d'assurer le maintient d'un balai d'essuie-glace pour le côté conducteur et d'un balai d'essuie-glace pour le côté passager de manière à former un kit destiné à un utilisateur souhaitant changer les deux balais d'essuie-glace avant de son véhicule.

L'ensemble 20 peut être réalisé par injection ou par extrusion selon les techniques précitées et dans lequel chacun des dispositifs de maintien présente une ou plusieurs caractéristiques du dispositif de maintien 1 précédent décrit.

Dans l'ensemble 20 présenté à la figure 10, les moyens de fixation 6 ainsi que les moyens de positionnement 7 des deux dispositifs de maintien 1 sont formés au même niveau sur chacun des deux dispositifs. Cela est particulièrement bien visible sur les vues en coupe 11a et 11b.

Chacun des dispositif de maintien 1a et 1b comprend un axe médian respectivement 17a, 17b séparant en deux, par le milieu et de manière longitudinale, le dispositif de maintien. Selon une première forme de l'ensemble 20, les axes médians 17a et 17b des deux dispositifs de maintien 1a et 1b sont disposés l'un au dessus de l'autre.

Comme précédemment décrit dans le cadre d'un dispositif de maintien unique, l'ensemble pourvu de deux dispositif de maintien comprend au niveau de chacun des dispositifs de maintien 1a et 1b, un rail 5 comprenant une section ouverte 5a destinée à recevoir un balai d'essuie-glace 2. Le rail 5 comprend :
- des moyens de positionnement 7 du balai d'essuie-glace 2 dans le rail 5, et
- des moyens de fixation 6 du balai d'essuie-glace dans le rail 5, les moyens de fixation comprenant des clips 12 assurant le maintien d'au moins un élément de structure du balai d'essuie-glace dans le rail 5.

Dans cet exemple de réalisation, les moyens de positionnement 7 et les moyens de fixation sont indépendants les uns des autres.

Les moyens de fixation 6 sont distribués sur le dispositif de maintien et disposés de part et d'autre de l'ouverture de la section ouverte 5a du rail 5. Ils agissent par paire sur l'élément de structure du balai d'essuie-glace une fois en place dans le dispositif de maintien.

Les moyens de positionnement 7 sont également disposés de part et d'autre de l'ouverture de la section ouverte 5a du rail 5 et contribuent par paire au maintien du balai d'essuie-glace.

Les différents exemples et mode de réalisation du rail 5, des moyens de fixation 6 et des moyens de positionnement 7 décrits dans le cadre d'un dispositif de maintien unique s'appliquent également à chacun des dispositifs de maintien de l'ensemble 20.

Une alternative possible dans la construction de l'ensemble 20 est représentée à la figure 12. Dans cette vue en coupe, réalisée au niveau des moyens de fixation 6, les axes médians 17a et 17b des deux dispositifs de maintien 1a et 1b sont décalés : l'entraxe des deux balais d'essuie-glace une fois positionnés est décalée. Cet agencement permet d'éviter, dans le cas de balais d'essuie-glace sont particulièrement longs, que leurs extrémités ne se touchent (due à la flexibilité des vertèbres du balai d'essuie-glace) et que les lames d'essuyage 3 ne soient endommagées.

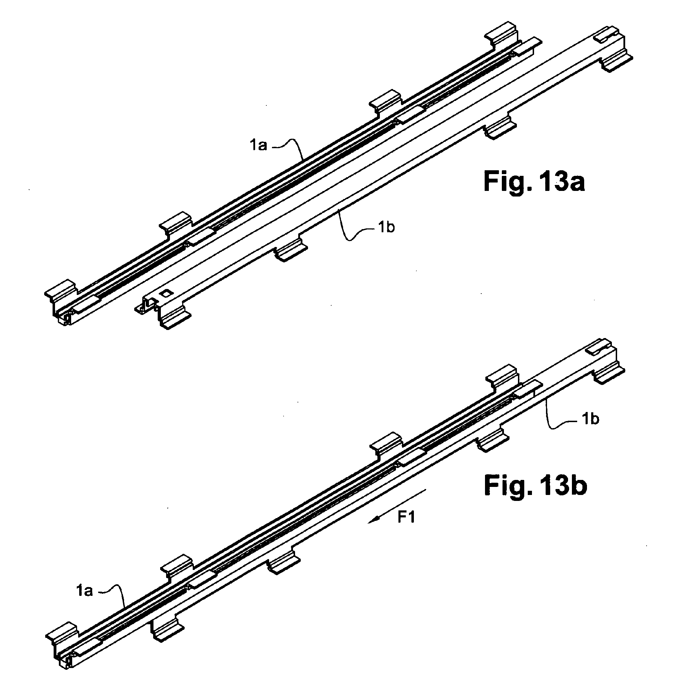

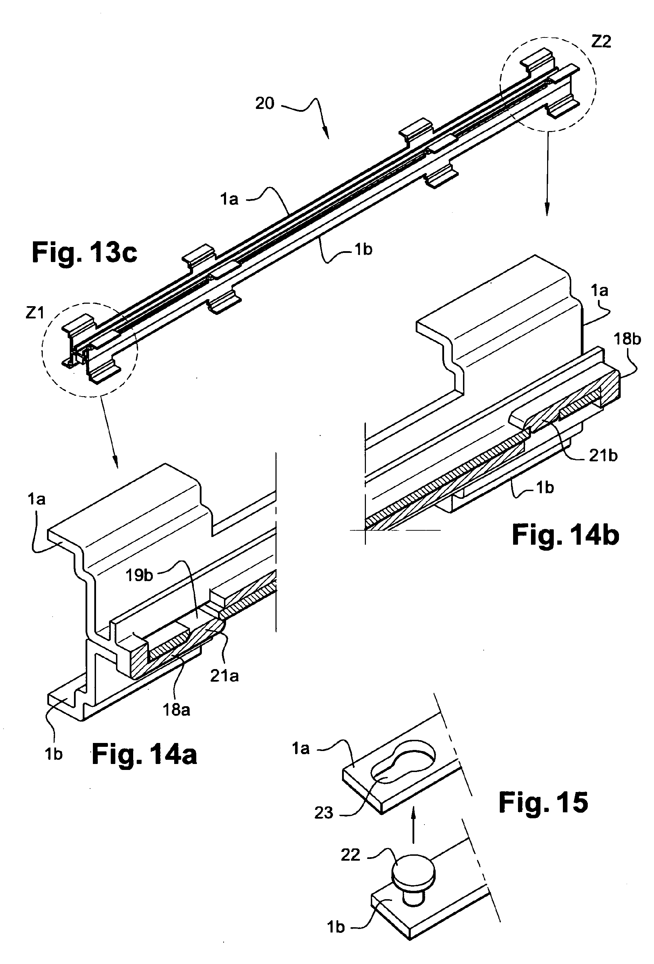

Les figures 13a à 13c présentent l'assemblage de deux dispositifs de maintien 1a et 1b distincts en un ensemble 20 pour le maintien de deux balais d'essuie-glace.

L'assemblage se fait de la manière suivante :
- Présentation tête-bêche des dispositifs de maintien l'un au dessus de l'autre de manière décalée longitudinalement et
- Clipsage des dispositifs de maintien par coulissement selon la direction de la flèche F1.

Le clipsage des dispositifs entre eux se fait, dans l'exemple présenté, par un système ergot / encoche, chaque dispositif de maintien comprenant une patte élastique 21 ayant un ergot 18, et une encoche 19.

Le dispositif de maintien 1 a, respectivement 1b, comprend une patte élastique 21a, respectivement 21b, ayant un ergot 18a, respectivement 18b, et une encoche 19a, respectivement 19b.

L'assemblage ergot / encoche est représenté en détail aux figures 14a et 14b qui sont respectivement des vues agrandies en coupe longitudinales des zones z1 et z2. Ainsi, lors de l'assemblage des deux dispositifs de maintien, l'ergot 18a du dispositif de maintien 1a est associé à l'encoche 19b du dispositif de maintien 1b, et de manière similaire, l'ergot 18b du dispositif de maintien 1b est associé à l'encoche 19a du dispositif de maintien 1a.

Les deux dispositifs de maintien peuvent être connectés ensemble par un ou plusieurs assemblages ergot / encoche disposés le long du dispositif selon la longueur des dispositifs de maintien.

Par ailleurs, au besoin, il est possible d'assembler deux dispositifs de maintien de longueurs différentes. Ceci est avantageux lorsque l'on réalise des kits de remplacement de balais d'essuie-glace car souvent, les balais d'essuie-glace conducteur et passager ont des longueurs différentes.

La figure 15 présente un autre système d'assemblage, utilisant un système de boutonnière 22 et ouverture complémentaire 23 entre les deux dispositifs de maintien.

L'invention ci-dessus décrite présente de nombreux avantages et notamment le fait de permettre un maintien à plat du balai d'essuie-glace dans un dispositif d'encombrement réduit.

On distingue de manière générale les problématiques liées à la fourniture de produits pour la première monte à destination des constructeurs automobiles et la fourniture de pièces de rechange.

Ainsi, lorsque le balai d'essuie-glace est à destination des usines du constructeur automobile en vu de son assemblage sur véhicule, le dispositif de maintien portant le balai d'essuie-glace peut être conditionné de manière stable et selon un dimensionnement réduit dans des caisses de rangement et permet un volume de livraison réduit. La conception du dispositif de maintien permet le montage du balai d'essuie-glace, pourvu de son dispositif de maintien, en toute simplicité sur le bras d'essuie-glace. Dans ce cas, le dispositif de maintien est recyclable pour un nouveau transport de balais d'essuie-glace.

Par contre, lorsque le balai d'essuie-glace est à destination de la rechange automobile, le dispositif de maintien portant le balai d'essuie-glace est alors mis dans un emballage en vue de sa présentation dans les rayonnages.

Cet emballage peut être réalisé sous la forme d'un blister, d'un sachet ou d'un cartonnage de dimension tout à fait compatible avec les contraintes environnementales actuelles. Il est alors possible, grâce au dispositif de maintien selon l'invention de concevoir un emballage dont l'encombrement est réduit.

L'utilisation d'un emballage blister sera tout à fait appréciée de l'utilisateur qui pourra voir le balai d'essuie-glace et vérifier que le connecteur qu'il porte est adapté aux bras d'essuie-glace montés sur son véhicule. Dans tous les cas, il n'y a pas d'interaction entre le dispositif de maintien et le connecteur du balai d'essuie-glace.

De manière tout à fait ingénieuse, le rail 5 peut présenter à l'une de ses extrémités un appendice comprenant un trou européen (ouverture normalisée pour la mise en rayonnage) permettant de suspendre l'ensemble du dispositif pourvu de son essuie-glace dans les rayons de distribution. Cet appendice est, par exemple, venu de matière avec le rail.

Ainsi ce nouveau dispositif de maintien permet le conditionnement, à l'unité ou en kit dans un ensemble de maintien, et le transport des balais d'essuie-glace, notamment de type « flat-blade » jusqu'au client final en réduisant de façon substantielle l'encombrement des balais d'essuie-glace.

L'utilisation d'un dispositif ou d'un ensemble de maintien tel que présenté permet de maintenir le ou les balai(s) d'essuie-glace dans un encombrement minimum et de réduire de façon importante le nombre de référence d'emballage.

En outre, ce dispositif permet une protection de la lame jusqu'à utilisation du balai d'essuie-glace en évitant son endommagement et sa déformation.

Il est, par ailleurs, à noter que le client final peut réutiliser le dispositif à d'autres fins. Ainsi, par exemple, les moyens de stabilisation du dispositif de maintien peuvent être utilisés comme raclette pour le givre une fois les balais d'essuie-glace en fonctionnement et le dispositif de maintien ôté. Les moyens de stabilisation, généralement centrés au niveau du dispositif de maintien, pourront présenter une forme lisse ou à dents selon l'utilisation finale souhaitée.

Selon un autre exemple, le dispositif de maintien peut également faire office de protège lame, notamment en hiver, pour un véhicule en stationnement longue durée, en évitant que la lame d'essuyage ne reste collée au pare-brise. Pour ce faire, en prévision d'un long stationnement, le dispositif de maintien est monté sur le balai d'essuie-glace connecté au bras d'essuie-glace du véhicule automobile.

Par ailleurs, selon les dimensions du balai d'essuie-glace, il est possible de faire varier la longueur du dispositif de maintien et d'ajouter le nombre de clips de fixation nécessaires au maintien efficace du balai d'essuie-glace.

Dans l'ensemble des modes de réalisation présentés et pour des raisons de clarté, les moyens de fixation et les moyens de positionnement ont été présentés en nombre limités mais ce nombre et leur espacement peut être adapté selon la longueur du balai d'essuie-glace à maintenir dans le dispositif de maintien.

La présente invention a été décrite dans le cadre d'un balai d'essuie-glace de type « flat-blade » mais est également applicable à des balais d'essuie-glace à lame ressort présentant une structure à courbure importante ou encore à des balais d'essuie-glace à structure classique à palonnier pour lesquels une recherche de réduction d'emballage est souhaitée.

## Revendications

1. Dispositif de maintien pour un balai d'essuie-glace comportant une lame d'essuyage (3) et un élément de structure (8), le dispositif ayant une section ouverte (5a) destinée à recevoir la lame d'essuyage (3) du balai d'essuie-glace (2), pour permettre son maintien sensiblement à plat, et comprenant,
- des moyens de positionnement (7) du balai d'essuie-glace (2) dans le dispositif de maintien (1),
- des moyens de fixation (6) du balai d'essuie-glace (2) dans le dispositif de maintien (1),
lesdits moyens de fixation étant sous la forme d'au moins un point de fixation (6a) agissant sur l'élément (8) de structure du balai d'essuie-glace (2), **caracterisé en ce que** les moyens de positionnement (7) et les moyens de fixation (6) sont indépendants les uns des autres.

2. Dispositif de maintien pour un balai d'essuie-glace selon la revendication 1, **caractérisé en ce que** les points de fixation (6a) sont disposés de part et d'autre de l'ouverture de la section ouverte (5a) du dispositif de maintien (1) et agissent par paire sur l'élément (8) de structure du balai d'essuie-glace (2).

3. Dispositif de maintien pour un balai d'essuie-glace selon la revendication 1, **caractérisé en ce que** les moyens de positionnement (7) sont disposés de part et d'autre de l'ouverture de la section ouverte (5a) du dispositif de maintien (1) et contribuent par paire au maintien du balai d'essuie-glace (2) lors de son positionnement.

4. Dispositif de maintien pour un balai d'essuie-glace selon l'une quelconque des revendications précédentes, **caractérisé en ce qu'**il se présente sous la forme d'un rail (5), de forme générale longitudinale, les moyens de positionnement (7) et les moyens de fixation (6) étant venus de matière avec le rail (5).

5. Dispositif de maintien pour un balai d'essuie-glace selon l'une quelconque des revendications précédentes, **caractérisé en ce qu'**il comprend, à l'intérieur de la section ouverte (5a) dans laquelle est inséré le balai d'essuie-glace (2), des moyens de protection (13) de la lame d'essuyage (3).

6. Dispositif de maintien pour un balai d'essuie-glace selon l'une quelconque des revendications 1 à 5, **caractérisé en ce que** les moyens de positionnement (7) sont disposés aux extrémités du dispositif de maintien (1).

7. Dispositif de maintien pour un balai d'essuie-glace selon l'une quelconque des revendications 2 à 6, le balai d'essuie-glace (2) comprenant un connecteur (4) destiné à permettre sa connexion à un bras d'essuie-glace, **caractérisé en ce que** les points de fixation (6a) du balai d'essuie-glace sont disposés de part et d'autre du connecteur (4) suivant la direction longitudinale du balai d'essuie-glace (2).

8. Dispositif de maintien pour un balai d'essuie-glace selon l'une quelconque des revendications 1 à 6 en combinaison avec la revendication 7, **caractérisé en ce que** le dispositif de maintien (1) présente, de part et d'autre du connecteur (4), une alternance de moyens de positionnement (7) et de moyens de fixation (6).

9. Ensemble de maintien pour un balai d'essuie-glace, **caractérisé en ce qu'**il comprend deux dispositifs de maintien (1) selon l'une quelconque des revendications précédentes.

10. Ensemble de maintien (20) pour un balai d'essuie-glace selon la revendication 9, **caractérisé en ce qu'**il comprend sur le premier dispositif de maintien (1a) des premiers moyens d'assemblage (18a, 19a, 21a, 22a, 23a) disposés à l'opposé de l'ouverture de la section ouverte (5a) et coopérant, par complémentarité de forme, avec des seconds moyens d'assemblage (18b, 19b, 21b, 22b, 23b) disposés à l'opposé de l'ouverture de la section ouverte (5a) du second dispositif de maintien (1 b).

11. Ensemble de maintien (20) pour un balai d'essuie-glace selon l'une des revendications 9 ou 10, **caractérisé en ce que**, chacun des dispositifs de maintien (1a, 1b) comprend un axe médian (17a, 17b) selon la direction longitudinale du balai d'essuie-glace (2) et **en ce que** les axes médians (17a, 17b) des deux dispositifs de maintien (1a, 1b), une fois assemblés, sont décalés l'un par rapport à l'autre.

12. Procédé de montage d'un balai d'essuie-glace dans un dispositif de maintien (1) selon l'une quelconque des revendications 1 à 8, **caractérisé en ce qu'**il comprend les étapes suivantes :
- positionner le balai d'essuie-glace (2) au dessus de la section ouverte (5a) du dispositif de maintien (1),
- exercer une pression sur le balai d'essuie-glace (2) en regard des moyens de fixation (6) pour permettre l'insertion et le maintien du balai d'essuie-glace (2) dans la section ouverte (5a) du dispositif de maintien (1).

13. Emballage pour un balai d'essuie-glace (2) **caractérisé en ce qu'**il comprend un dispositif de maintien (1) et/ou un ensemble de maintien (20) selon l'un quelconque des revendications 1 à 11.

14. Dispositif de maintien pour un balai d'essuie-glace destiné à maintenir dans un profil prédéterminé (5a) un balai d'essuie-glace (2) ayant un élément support (8) de lame d'essuyage (3), le dispositif comportant,
- au moins deux moyens de positionnement (7) du balai d'essuie-glace (2) sur le dispositif de maintien (1) ; et
- des moyens de fixation (6) du balai d'essuie-glace (2) au dispositif de maintien (1),
lesdit moyens de fixation (6) du balai d'essuie-glace (2) sont destinés à coopérer avec l'élément support (8) de lame d'essuyage (3), **caractérisé en ce que** les moyens de positionnement (7) et les moyens de fixation (6) sont indépendants les uns des autres.

## Patentansprüche

1. Haltevorrichtung für ein Scheibenwischerblatt, umfassend ein Wischerblatt (3) und ein Strukturelement (8), wobei die Vorrichtung einen offenen Querschnitt (5a) aufweist, der dazu bestimmt ist, das Wischerblatt (3) des Scheibenwischerblattes (2) aufzunehmen, um sein Halten in einem im Wesentlichen flachen Zustand zu ermöglichen, umfassend:
- Mittel zum Positionieren (7) des Scheibenwischerblattes (2) in der Haltevorrichtung (1),
- Mittel zur Befestigung (6) des Scheibenwischerblattes (2) in der Haltevorrichtung (1),
wobei die Befestigungsmittel in Form mindestens eines Befestigungspunktes (6a) vorhanden sind, der auf das Strukturelement (8) des Scheibenwischerblattes (2) einwirkt, **dadurch gekennzeichnet, dass** die Positioniermittel (7) und die Befestigungsmittel (6) voneinander unabhängig sind.

2. Haltevorrichtung für ein Scheibenwischerblatt nach Anspruch 1, **dadurch gekennzeichnet, dass** die Befestigungspunkte (6a) beiderseits der Öffnung des offenen Querschnitts (5a) der Haltevorrichtung (1) angeordnet sind und paarweise auf das Strukturelement (8) des Scheibenwischerblattes (2) einwirken.

3. Haltevorrichtung für ein Scheibenwischerblatt nach Anspruch 1, **dadurch gekennzeichnet, dass** die Positioniermittel (7) beiderseits der Öffnung des offenen Querschnitts (5a) der Haltevorrichtung (1) angeordnet sind und paarweise zum Halten des Scheibenwischerblattes (2) bei seiner Positionierung beitragen.

4. Haltevorrichtung für ein Scheibenwischerblatt nach einem der vorhergehenden Ansprüche, **dadurch gekennzeichnet, dass** sie in Form einer Schiene (5) von allgemeiner länglicher Form vorhanden ist, wobei die Positioniermittel (7) und die Befestigungsmittel (6) mit der Schiene (5) aus einem Stück sind.

5. Haltevorrichtung für ein Scheibenwischerblatt nach einem der vorhergehenden Ansprüche, **dadurch gekennzeichnet, dass** sie innerhalb des offenen Querschnitts (5a), in dem das Scheibenwischerblatt (2) eingesetzt ist, Mittel zum Schutz (13) des Wischerblattes (3) umfasst.

6. Haltevorrichtung für ein Scheibenwischerblatt nach einem der Ansprüche 1 bis 5, **dadurch gekennzeichnet, dass** die Positioniermittel (7) an den Enden der Haltevorrichtung (1) angeordnet sind.

7. Haltevorrichtung für ein Scheibenwischerblatt nach einem der Ansprüche 2 bis 6, wobei das Scheibenwischerblatt (2) einen Verbinder (4) umfasst, der dazu bestimmt ist, seine Verbindung mit einem Wischerarm zu ermöglichen, **dadurch gekennzeichnet, dass** die Befestigungspunkte (6a) des Scheibenwischerblattes beiderseits des Verbinders (4) entlang der Längsrichtung des Scheibenwischerblattes (2) angeordnet sind.

8. Haltevorrichtung für ein Scheibenwischerblatt nach einem der Ansprüche 1 bis 6 in Kombination mit Anspruch 7, **dadurch gekennzeichnet, dass** die Haltevorrichtung (1) beiderseits des Verbinders (4) eine Wechselfolge von Positioniermitteln (7) und Befestigungsmitteln (6) aufweist.

9. Halteset für ein Scheibenwischerblatt, **dadurch gekennzeichnet, dass** es zwei Haltevorrichtungen (1) nach einem der vorhergehenden Ansprüche umfasst.

10. Halteset (20) für ein Scheibenwischerblatt nach Anspruch 9, **dadurch gekennzeichnet, dass** es auf der ersten Haltevorrichtung (1a) erste Montagemittel (18a, 19a, 21a, 22a, 23a) umfasst, die gegenüber der Öffnung des offenen Querschnitts (5a) angeordnet sind und durch Formkomplementarität mit zweiten Montagemitteln (18b, 19b, 21b, 22b, 23b) zusammenwirken, die gegenüber der Öffnung des offenen Querschnitts (5a) der zweiten Haltevorrichtung (1b) angeordnet sind.

11. Halteset (20) für ein Scheibenwischerblatt nach einem der Ansprüche 9 oder 10, **dadurch gekennzeichnet, dass** jede der Haltevorrichtungen (1a, 1b) eine Mittelachse (17a, 17b) in Längsrichtung des Scheibenwischerblattes (2) umfasst und dass die Mittelachsen (17a, 17b) der beiden Haltevorrichtungen (1a, 1b), wenn sie zusammengebaut sind, zueinander versetzt sind.

12. Verfahren zur Montage eines Scheibenwischerblattes in einer Haltevorrichtung (1) nach einem der Ansprüche 1 bis 8, **dadurch gekennzeichnet, dass** es die folgenden Schritte umfasst:
- Positionieren des Scheibenwischerblattes (2) über dem offenen Querschnitt (5a) der Haltevorrichtung (1),
- Ausüben eines Drucks auf das Scheibenwischerblatt (2) gegenüber den Befestigungsmitteln (6), um das Einsetzen und Halten des Scheibenwischerblattes (2) in dem offenen Querschnitt (5a) der Haltevorrichtung (1) zu ermöglichen.

13. Verpackung für ein Scheibenwischerblatt (2), **dadurch gekennzeichnet, dass** sie eine Haltevorrichtung (1) und/oder ein Halteset (20) nach einem der Ansprüche 1 bis 11 umfasst.

14. Haltevorrichtung für ein Scheibenwischerblatt, die dazu bestimmt ist, in einem vorbestimmten Profil (5a) ein Scheibenwischerblatt (2) mit einem Tragelement (8) eines Wischerblattes (3) zu halten, wobei die Vorrichtung Folgendes umfasst:
- mindestens zwei Mittel zum Positionieren (7) des Scheibenwischerblattes (2) auf der Haltevorrichtung (1), und
- Mittel zur Befestigung (6) d e s Scheibenwischerblattes (2) an der Haltevorrichtung (1),
wobei die Befestigungsmittel (6) des Scheibenwischerblattes (2) dazu bestimmt sind, mit dem Tragelement (8) des Wischerblattes (3) zusammenzuwirken, **dadurch gekennzeichnet, dass** die Positioniermittel (7) und die Befestigungsmittel (6) voneinander unabhängig sind.

## Claims

1. Retention device for a windscreen wiper blade comprising a wiping strip (3) and a structural element (8), the device having an open section (5a) designed to receive the wiping strip (3) of the windscreen wiper blade (2) in order to allow it to be held substantially flat, and comprising
- means (7) for positioning the windscreen wiper blade (2) in the retention device (1),
- means (6) for attaching the windscreen wiper blade (2) in the retention device (1),
the said attachment means taking the form of at least one attachment point (6a) acting on the structural element (8) of the windscreen wiper bl ade (2), **characterized in that** the positioning means (7) and the attachment means (6) are independent of one another.

2. Retention device for a windscreen wiper blade according to Claim 1, **characterized in that** the attachment points (6a) are placed on either side of the opening of the open section (5a) of the retention device (1) and act as a pair on the structural element (8) of the windscreen wiper blade (2).

3. Retention device for a windscreen wiper blade according to Claim 1, **characterized in that** the positioning means (7) are placed on either side of the opening of the open section (5a) of the retention device (1) and contribute as a pair to the retention of the windscreen wiper blade (2) when it is positioned.

4. Retention device for a windscreen wiper blade according to any one of the preceding claims, **characterized in that** it takes the form of a rail (5), of generally longitudinal shape, the positioning means (7) and the attachment means (6) being made in one piece and of the same material as the rail (5).

5. Retention device for a windscreen wiper blade according to any one of the preceding claims, **characterized in that** it comprises, inside the open section (5a) into which the windscreen wiper blade (2) is inserted, means (13) for protecting the wiping strip (3) .

6. Retention device for a windscreen wiper blade according to any one of Claims 1 to 5, **characterized in that** the positioning means (7) are placed at the ends of the retention device (1).

7. Retention device for a windscreen wiper blade according to any one of Claims 2 to 6, the windscreen wiper blade (2) comprising a connector (4) designed to allow its connection to a windscreen wiper arm, **characterized in that** the attachment points (6a) for attaching the windscreen wiper blade are placed on either side of the connector (4) in the longitudinal direction of the windscreen wiper blade (2).

8. Retention device for a windscreen wiper blade according to any one of Claims 1 to 6, in combination with Claim 7, **characterized in that** the retention device (1) has, on either side of the connector (4), an alternation of positioning means (7) and of attachment means (6).

9. Retention assembly for a windscreen wiper blade, **characterized in that** it comprises two retention devices (1) according to any one of the preceding claims.

10. Retention assembly (20) for a windscreen wiper blade according to Claim 9, **characterized in that** it comprises, on the first retention device (1a), first assembly means (18a, 19a, 21a, 22a, 23a) placed opposite to the opening of the open section (5a) and interacting, by complementarity of shape, with second assembly means (18b, 19b, 21b, 22b, 23b) placed opposite to the opening of the open section (5a) of the second retention device (1b).

11. Retention assembly (20) for a windscreen wiper blade according to one of Claims 9 and 10, **characterized in that** each of the retention devices (1a, 1b) comprises a median axis (17a, 17b) in the longitudinal direction of the windscreen wiper blade (2) and **in that** the median axes (17a, 17b) of the two retention devices (1a, 1b), once assembled, are offset relative to one another.

12. Method for mounting a windscreen wiper blade in a retention device (1) according to any one of Claims 1 to 8, **characterized in that** it comprises the following steps:
- positioning the windscreen wiper blade (2) above the open section (5a) of the retention device (1),
- exerting a pressure on the windscreen wiper blade (2) opposite to the attachment means (6) in order to allow the insertion and the retention of the windscreen wiper blade (2) in the open section (5a) of the retention device (1).

13. Packaging for a windscreen wiper blade (2), **characterized in that** it comprises a retention device (1) and/or a retention assembly (20) according to any one of Claims 1 to 11.

14. Retention device for a windscreen wiper blade designed to retain in a predetermined profile (5a) a windscreen wiper blade (2) having an element (8) for supporting a wiping strip (3), the device comprising
- at least two means (7) for positioning the windscreen wiper blade (2) on the retention device (1); and
- means (6) for attaching the windscreen wiper blade (2) to the retention device (1),
the said means (6) for attaching the windscreen wiper blade (2) are designed to interact with the element (8) for supporting the wiping strip (3), **characterized in that** the positioning means (7) and the attachment means (6) are independent of one another.
